# EUROPEAN PATENT APPLICATION

(11) **EP 4 807 835 A1**
(43) Date of publication of application: **16.09.2026**
(21) Application number: 25864606.6
(22) Date of filing: 18.09.2025
(51) Int. Cl.: H01M 10/04

(54) **STACKING SYSTEM AND METHOD USING SAME FOR MANUFACTURING ELECTRODE ASSEMBLY**

(30) Priority: 30.10.2024 KR 20240151402; 28.08.2025 KR 20250121351
(71) Applicant: LG ENERGY SOLUTION, LTD., Seoul 07335 (KR)
(72) Inventor: KIM, Nam Young, Daejeon 34122 (KR)
(74) Representative: Plasseraud IP
(86) International application number: PCT/KR2025/014545
(87) International publication number: WO 2026/095351

(57) **Abstract**

A stacking system according to the present disclosure may include a stack mandrel configured to support at least a part of a folded portion of a separator so that the separator is folded between electrodes and to hold an end portion of the electrode, and a pressure applying device configured to apply pressure to an edge of the separator, wherein the edge of the separator includes an overlapping edge region that overlaps the stack mandrel and a non-overlapping edge region that does not overlap the stack mandrel, and wherein the pressure applying device is configured to apply pressure to the non-overlapping edge region.

## Description

### TECHNICAL FIELD

### CROSS-REFERENCE TO RELATED APPLICATIONS

This application is based on and claims priority from Korean Patent Application No. 10-2024-0151402 filed on October 30, 2024, and Korean Patent Application No. 10-2025-0121351 filed on August 28, 2025 with the Ministry of Intellectual Property, the disclosures of which are incorporated herein in their entirety by reference.

### TECHNICAL FIELD

The present disclosure relates to a stacking system and a method for manufacturing an electrode assembly performed thereby. More particularly, the present disclosure relates to a stacking system configured to prevent swelling on an edge by applying pressure to the edge, and a method for manufacturing an electrode assembly performed thereby.

### BACKGROUND ART

Secondary batteries may be designed to generate electricity. A secondary battery may include a battery case that forms the exterior of the secondary battery and an electrode assembly housed in the battery case. The electrode assembly may include an electrode including an active material layer including active materials, for example, lithium ions and a current collector configured to move electricity generated in the active material layer, and a separator located between opposing electrodes to prevent physical contact between the electrodes. In other words, the plurality of electrodes may be stacked in a line, and the separator may be interposed between the plurality of electrodes.

When the separator is interposed between the plurality of electrodes, the separator may be interposed through many different methods using a stacking system. One method divides one separator into many separator parts, and places each separator part between the plurality of electrodes. Another method does not cut one separator, and instead, puts the separator between the electrodes in a zigzag pattern such that one end of the electrode is covered with the separator. This placement method of the separator may be referred to as a zigzag stacking method.

Because the zigzag stacking method is performed in such a manner that the separator wraps around the electrode, it may reduce the likelihood of physical contact between the adjacent electrodes, thereby reducing electrical short risks between the electrodes. Accordingly, the placement of the separator by the zigzag stacking method may provide the stable secondary battery.

However, as the zigzag stacking method is performed by folding the separator at one end of the electrode, when the folding of the separator is not done properly, swelling may occur on the folded edge of the separator. When the separator becomes swollen, air may come into the swollen separator, and air infiltration may impede electricity generation.

Additionally, swelling on the edge of the separator may occur in not only the above-described zigzag stacking method but also the method that cuts the separator into separator parts. Therefore, it is necessary to prevent swelling on the edge when placing the separator.

The above-described background is information possessed or acquired by the inventor in the process of deriving the present disclosure, and is not necessarily the prior art published and known to the general public before the time of filing.

### DISCLOSURE

### TECHNICAL PROBLEM

The present disclosure is designed to solve the above-described problems, and therefore the present disclosure is directed to providing a stacking system for preventing swelling on an edge of a separator.

The technical problems of the present disclosure to be solved are not limited to the above-mentioned technical problems, and these and other technical problems will be clearly understood by persons having ordinary skill in the technical field pertaining to the present disclosure from the following description.

### TECHNICAL SOLUTION

A stacking system according to an embodiment of the present disclosure includes a stack mandrel configured to support at least a part of a folded portion of a separator so that the separator is folded between electrodes and to hold an end portion of the electrode, and a pressure applying device configured to apply pressure to an edge of the separator, wherein the edge of the separator includes an overlapping edge region that overlaps the stack mandrel and a non-overlapping edge region that does not overlap the stack mandrel, and wherein the pressure applying device is configured to apply pressure to the non-overlapping edge region.

The pressure applying device may be configured to prevent a gap between the edges of each part of the separator being stacked during folding and stacking of the separator.

The pressure applying device may be configured to apply heat to the separator.

The stack mandrel may include a pair of stack mandrels, each located at an end portion of the separator in an extension direction to support each end portion of the folded portion of the separator, and the pressure applying device may be located between the pair of the stack mandrels while applying pressure to the separator.

The stacking system may further include a separator feeding device configured to feed the separator so that while the separator is supported by the stack mandrel, the separator is folded to form a separator part located between the electrodes, and the separator may include a closing edge where end portions of adjacent separator parts are connected to each other; and an open edge where the end portions of the adjacent separator parts are separated from each other.

The pressure applying device may be configured to apply pressure to the closing edge while the stack mandrel supports the separator in order to prevent an air gap from forming in the closing edge.

The pressure applying device may be spaced apart from the overlapping edge region while the stack mandrel supports the separator.

The pressure applying device may be configured to apply pressure to the open edge while the stack mandrel supports the separator in order to prevent a short circuit in the electrode.

The stack mandrel may include a first stack mandrel and a second stack mandrel located adjacent to a pair of opposing closing edges of the separator during the folding of the separator, respectively and configured to form the pair of closing edges in an alternating manner, respectively, and the pressure applying device may include a first pressure applying device to apply pressure to the separator while the first stack mandrel supports the separator, and a second pressure applying device to apply pressure to the separator while the second stack mandrel supports the separator.

The first pressure applying device and the second pressure applying device may not contact the separator at a same time.

The stacking system may further include an electrode moving device configured to move the electrode toward the separator, and the pressure applying device may be coupled to the electrode moving device.

The stacking system may further include an electrode moving device configured to move the electrode toward the separator, the electrode moving device may be configured to hold and move the electrode and separate the electrode above the separator, and the pressure applying device may be located on bottom of the electrode moving device to apply pressure to the separator while the electrode moving device is located above the separator.

The electrode moving device may be configured to hold the electrode by negative pressure, and the stacking system may further include an alignment table on which the electrode is placed to allow the electrode moving device to hold the electrode.

The pressure applying device may be spaced apart from the electrode while applying pressure to the separator.

The stacking system may further include a stack table where the separator and the electrode are stacked, and the stack table may be configured to support the separator while the pressure applying device applies pressure to the separator.

A stacking system according to an embodiment of the present disclosure includes a pair of stack mandrels configured to hold an end portion of an electrode and support two end portions of a folded portion of the separator so that the separator is folded between the electrodes, and a pressure applying device configured to apply pressure to an edge of the separator, wherein the pressure applying device is located between the pair of the stack mandrels while applying pressure to the edge of the separator.

The edge of the separator may include an overlapping edge region that overlaps the stack mandrel, and a non-overlapping edge region that does not overlap the stack mandrel, and the pressure applying device may be configured to apply pressure to the non-overlapping edge region.

The pressure applying device may be configured to prevent a gap between the edges of each part of the separator being stacked during folding and stacking of the separator.

The pressure applying device may be configured to apply heat to the separator.

A method for manufacturing an electrode assembly according to an embodiment of the present disclosure includes a preparation step of preparing electrodes, a separator located between the electrodes, a stack mandrel configured to hold end portions of the electrode and the separator and a pressure applying device configured to apply pressure to an edge of the separator, an electrode stacking step of stacking the electrode, a separator stacking step of stacking the separator on the electrode, a separator folding step of fixing the end portions of the separator and the electrode by the stack mandrel, and folding the separator, and a pressure applying step of applying pressure to the edge of the separator by the pressure applying device, wherein the pressure applying step is configured to apply pressure to a non-overlapping edge region where the separator does not overlap the stack mandrel.

### ADVANTAGEOUS EFFECTS

The stacking system according to an embodiment of the present disclosure may apply pressure to the edge of the separator during the stacking of the separator, thereby preventing swelling on the edge of the separator in the electrode assembly.

The stacking system according to an embodiment of the present disclosure may include the pressure applying device to hold the edge of the separator that is not held by the stack mandrel that holds the separator and the electrode during the stacking of the separator, thereby effectively preventing swelling on the edge of the separator in the electrode assembly.

The pressure applying device according to an embodiment of the present disclosure may apply pressure to the closing edge formed by folding the separator to prevent elastic recovery of the closing edge, thereby preventing swelling on the closing edge.

The pressure applying device according to an embodiment of the present disclosure may apply pressure to the open edge where end portions of adjacent separator parts are separated from each other, thereby preventing short circuits caused by physical contact between the electrodes over the open edge.

The pressure applying device according to an embodiment of the present disclosure may be coupled to the electrode moving device configured to move the electrode toward the separator, to allow the pressure applying device to apply pressure to the edge of the separator simultaneously with the movement of the electrode toward the separator, thereby minimizing the increase in process time that results from adding the pressure applying device.

The method for manufacturing the electrode assembly according to an embodiment of the present disclosure may be performed using the above-described stacking system and thus, have the above-described effects.

The effects that can be obtained from the present disclosure are not limited to the above-mentioned effects, and these and other effects will be clearly understood by persons having ordinary skill in the technical field pertaining to the present disclosure from the following description.

### BRIEF DESCRIPTION OF THE DRAWINGS

FIG. 1 is an assembly diagram of a secondary battery according to a first embodiment of the present disclosure.
FIG. 2 is a conceptual diagram showing that a stacking system provided to manufacture an electrode assembly shown in FIG. 1 is moving an electrode.
FIG. 3 is a conceptual diagram showing that the stacking system shown in FIG. 2 has moved the electrode.
FIG. 4 is a conceptual diagram showing that a separator is folded and stacked to wrap the electrode shown in FIG. 3 and a stack mandrel is separated from the electrode assembly.
FIG. 5 is a conceptual diagram showing that the stack mandrel is inserted into the electrode assembly shown in FIG. 4 again, the electrode is placed on the separator and the separator is folded again.
FIG. 6 is a cross-sectional view taken along the line A-A' in FIG. 5, showing the electrode assembly shown in FIG. 5 being stacked and the stack mandrel inserted into the electrode assembly.
FIG. 7 is a top view of the electrode assembly shown in FIG. 6 being stacked.
FIG. 8 is a perspective view of an electrode moving device and a pressure applying device shown in FIG. 2, when viewed from below.
FIG. 9 is a perspective view of an electrode moving device and a plurality of pressure applying devices shown in FIG. 2, when viewed from below.
FIG. 10 is a flowchart of a method for manufacturing an electrode assembly performed by the stacking system shown in FIG. 2.
FIG. 11 is a perspective view of an electrode moving device and a pressure applying device according to a second embodiment of the present disclosure, when viewed from below.
FIG. 12 is a conceptual diagram showing a stacking system according to a third embodiment of the present disclosure.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other embodiment, and are not intended to limit the corresponding elements in another aspect (for example, importance or order).

When a certain (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes not only direct connection, coupling, support or contact of the elements but also indirect connection, coupling, support or contact through a third element.

When an element is referred to as being located "on" another element, the element can contact the other element and intervening elements may be present.

Meanwhile, the terms "top-bottom direction", "lower", and "front-rear direction" as used herein are defined on the basis of the drawings, and the shape and location of each element is not limited by these terms.

Hereinafter, the embodiments according to the present disclosure will be described in detail with reference to the accompanying drawings.

### First embodiment

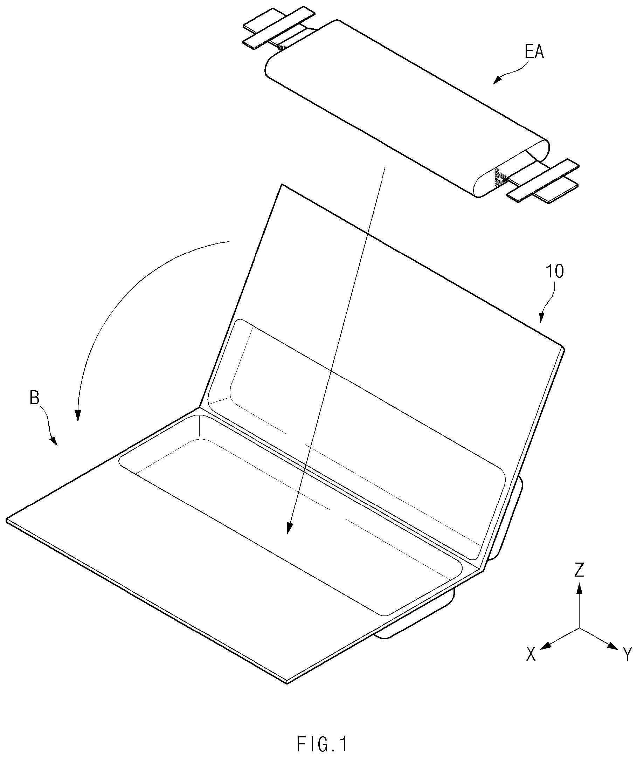

FIG. 1 is an assembly diagram of a secondary battery B according to a first embodiment of the present disclosure.

As shown in FIG. 1, the secondary battery B may be provided to generate electricity. The secondary battery B may include an electrode assembly EA formed by stacking electrodes 20 that substantially generate electricity, and a battery case 10 accommodating the electrode assembly EA. For reference, as shown in FIG. 1, the battery case 10 may be formed through a pouch. A portion of the battery case 10 other than a convex portion that forms a space to hold the electrode assembly EA may undergo an additional process to reduce the occupied space by cutting or folding, after sealing of the battery case 10. More specifically, the electrode assembly EA and an electrolyte (not shown) may be housed in the battery case 10, and when metal ions, for examples, lithium ions move through the electrolyte due to reactions in the electrode assembly EA, electricity may be generated with the movement of the metal ions.

The electrode assembly EA may be formed by stacking each of the plurality of electrodes 20 including positive and negative electrodes in an alternating manner with a separator 30 interposed between the adjacent electrodes 20. In particular, the separator 30 may be configured to prevent physical contact between the adjacent electrodes 20. When the electrodes 20 contact each other, an electrical short circuit may occur, so the separator 30 may be configured to prevent the short circuit that may occur in the electrode 20. To obtain this effect, the separator 30 may be stacked together with the electrode 20 and a process of stacking the separator 30 and the electrode 20 may be referred to as a stacking process.

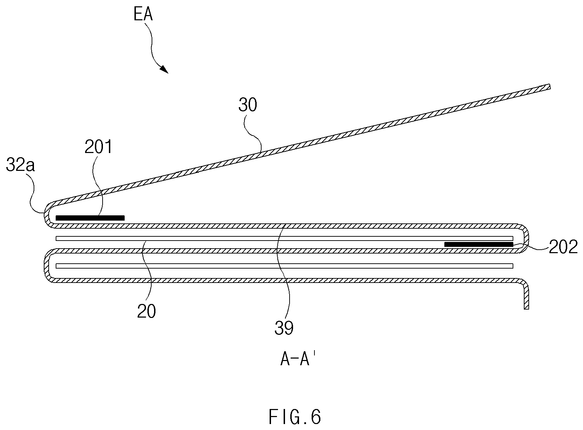

The stacking method of the separator 30 may include a plurality of methods. One of the stacking methods of the separator 30 may divide one separator 30 into a plurality of separator 30 parts and place each separator 30 part between the plurality of electrodes 20. In addition, another method does not cut one separator 30 and may put the separator 30 between the electrodes 20 in a zigzag pattern such that one end of the electrode 20 is covered with the separator 30. This stacking method of separator 30 may be referred to as a zigzag stacking method. In particular, the stacking method of separator 30 may be understood with reference to FIG. 6.

Because the zigzag stacking method is performed in such a manner that the separator 30 wraps around the electrode 20, it may reduce the likelihood of physical contact between the adjacent electrodes 20, thereby reducing the likelihood of electrical short circuits between the electrodes 20. Accordingly, the stable secondary battery B may be provided by placing the separator 30 of the zigzag stacking method.

However, as the zigzag stacking method is performed by folding the separator 30 at one end of the electrode 20, when the folding of the separator 30 is not done properly, swelling may occur on the folded edge of the separator 30. When the separator 30 becomes swollen, air may come into the swollen separator 30, and air infiltration may impede electricity generation.

Additionally, swelling on the edge of the separator 30 may occur in not only the above-described zigzag stacking method but also the stacking method that cuts the separator 30 into separator 30 parts. Accordingly, in the stacking of the separator 30 regardless of the stacking method, it is necessary to prevent swelling on the edge of the separator 30. The first embodiment of the present disclosure describes a stacking system 1 for preventing swelling on the edge of the separator 30 in the zigzag stacking. Further, in this disclosure, the electrode assembly EA and the separator 30 may refer to those that are in process, but not yet completed. In this disclosure, the electrode assembly EA and the separator 30 may be differently understood as those that have been completed or are being completed depending on the context.

The stacking system 1 according to an embodiment of the present disclosure that has solved the above-described problems will be described below.

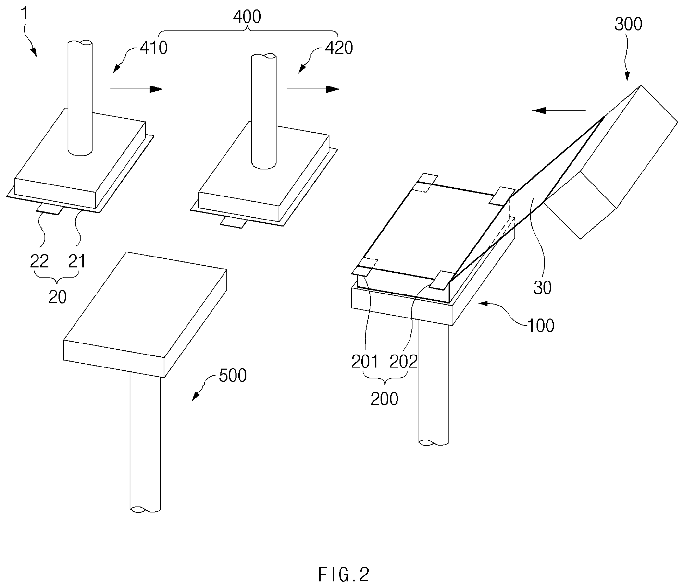

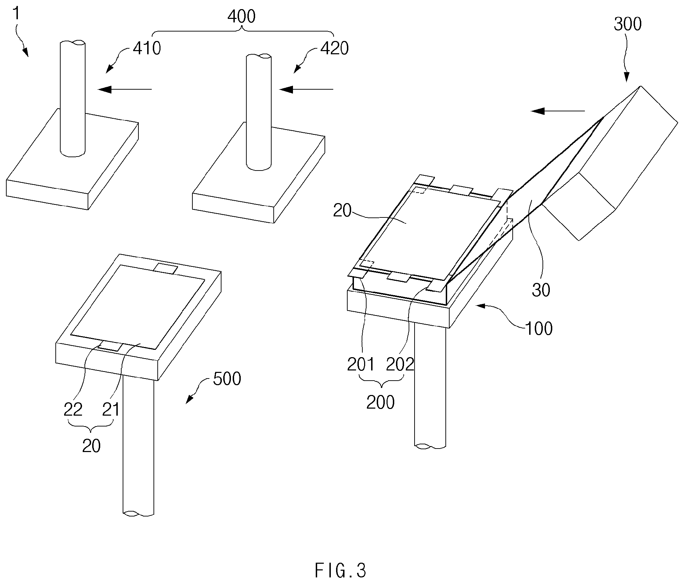

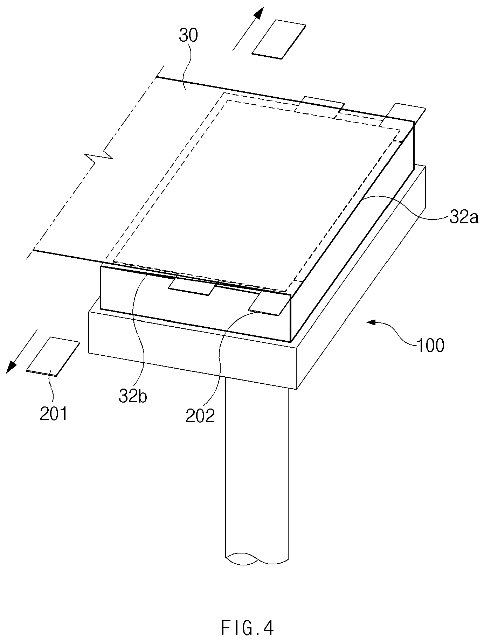

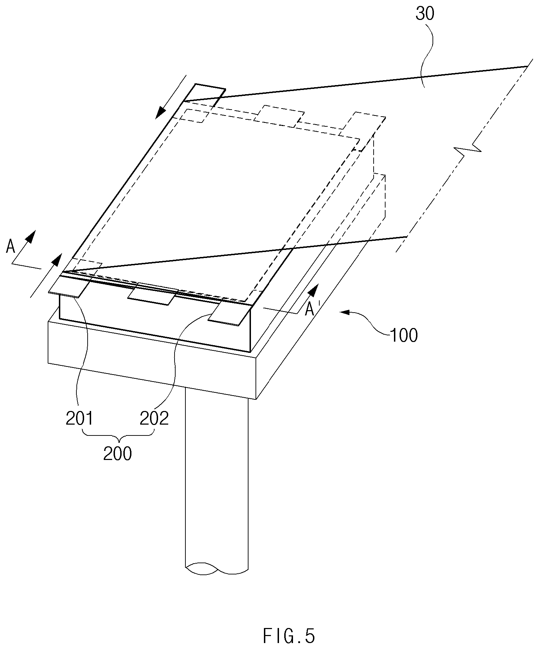

FIG. 2 is a conceptual diagram showing that the stacking system 1 provided to manufacture the electrode assembly EA shown in FIG. 1 is moving the electrode 20. FIG. 3 is a conceptual diagram showing that the stacking system 1 shown in FIG. 2 has moved the electrode 20. FIG. 4 is a conceptual diagram showing that the separator 30 is folded and stacked to wrap the electrode 20 shown in FIG. 3 and a stack mandrel 200 is separated from the electrode assembly EA. FIG. 5 is a conceptual diagram showing that the stack mandrel 200 is inserted into the electrode assembly EA shown in FIG. 4 again, the electrode 20 is placed on the separator 30 and the separator 30 is folded again. FIG. 6 is a cross-sectional view taken along the line A-A' in FIG. 5, showing the electrode assembly EA shown in FIG. 5 being stacked and the stack mandrel 200 inserted into the electrode assembly EA.

Hereinafter, the stacking system 1 according to the first embodiment of the present disclosure will be described with reference to FIGS. 2 to 6.

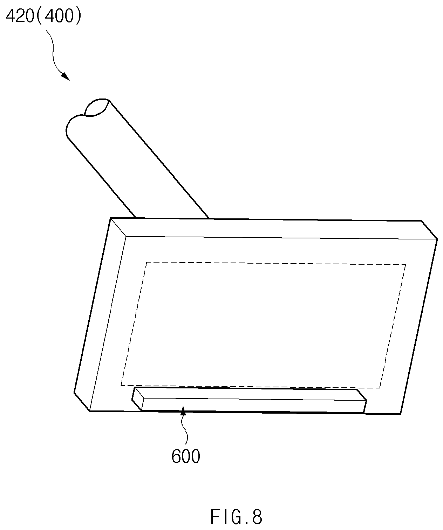

As shown in FIG. 2, the stacking system 1 configured to stack the separator 30 and the electrode 20 may be provided. The stacking system 1 may include a first electrode moving device 410, a second electrode moving device 420, an alignment table 500, a stack table 100, a separator feeding device 300, a first stack mandrel 201 and a second stack mandrel 202. Further, the stacking system 1 may further include a pressure applying device 600 coupled to the bottom of the second electrode moving device 420 as shown in FIG. 8. However, if necessary, the stacking system 1 according to the first embodiment of the present disclosure may omit the remaining components excluding the stack mandrel 200 and the pressure applying device 600.

The stack table 100 may be where the separator 30 and the electrode 20 are stacked.

The first electrode moving device 410 and the second electrode moving device 420 may be configured to move the electrode 20. The first electrode moving device 410 and the second electrode moving device 420 may be referred to as an electrode moving device 400 having the common feature as the superordinate concept.

More specifically, as shown in FIG. 2, the first electrode moving device 410 may be configured to fix the electrode 20 and move the electrode 20 to the alignment table 500. The first electrode moving device 410 may hold the electrode 20 to fix the electrode 20 to the lower surface of the first electrode moving device 410, and move the electrode 20 above the alignment table 500. In addition, the first electrode moving device 410 may release the hold on the electrode 20 above the alignment table 500 to place the electrode 20 on the alignment table 500. In other words, the alignment table 500 may be where the electrode 20 moved by the electrode moving device 400 is placed.

As shown in FIG. 2, the second electrode moving device 420 may move the electrode 20 from the alignment table 500 to the stack table 100. The movement of the electrode 20 by the second electrode moving device 420 may correspond to that of the first electrode moving device 410. Here, "correspond" may be a word that signifies identical or similar. In other words, the electrode moving device 400 may be configured to hold the electrode 20 by negative pressure. When the separator 30 is located on the stack table 100, the second electrode moving device 420 may move the electrode 20 from the alignment table 500 to the stack table 100 to place the electrode 20 on the separator 30. On the basis of FIG. 2, the separator 30 may be located on the electrode assembly EA formed by stacking the electrode 20 and the separator 30, and the electrode 20 being newly moved may be placed on the separator 30 located on the electrode assembly EA by the second electrode moving device 420. In this instance, the electrode 20 may include a coated portion 21 where an active material layer is located on a current collector so that the current collector and active materials overlap, and an uncoated portion 22 where only the current collector is located, forming an electrode 20 tab. The electrode 20 may be located on the separator 30 such that the coated portion 21 is wrapped by the separator 30 and the uncoated portion 22 is exposed from the separator 30.

As shown in FIGS. 3 to 6, when the electrode 20 is located on the separator 30, the separator 30 may be folded to wrap the electrode 20. The separator 30 may be fed from the separator feeding device 300, and the separator feeding device 300 may move and fold the separator 30. That is, the separator feeding device 300 may be configured to feed the separator 30 so that while the separator 30 is supported by the stack mandrel 200, the separator 30 is folded to form a separator part 39 located between the electrodes 20. More specifically, the inside of a folded portion of the separator 30 may be supported by the stack mandrel 200 in order to easily fold the separator 30. In this instance, the stack mandrel 200 may be the superordinate concept that encompasses the common feature of the first stack mandrel 201 and the second stack mandrel 202. The stack mandrel 200 may be configured to support at least a part of the folded portion of the separator 30 so that the separator 30 is folded between the electrodes 20. In addition, the stack mandrel 200 may be configured to hold an end portion of the electrode 20. Referring back to FIG. 3, on the basis of the uncoated portion 22, the first stack mandrel 201 may be located at the left side, and the second stack mandrel 202 may be located at the right side of the uncoated portion 22. As shown in FIG. 4, during the folding of the separator 30, the second stack mandrel 202 may support the separator 30 at the inside of the separator 30, helping to fold the separator 30.

The stack mandrel 200 may help to fold the separator 30, and at the same time, apply pressure down onto the separator 30 to fix the separator 30 with respect to the stack table 100. Further, the stack mandrel 200 may fix the electrode 20. More specifically, the stack mandrel 200 may be located such that the end portion of the electrode 20 and the stack mandrel 200 overlap, and be configured to apply pressure down onto the electrode 20. Accordingly, the electrode 20 may be fixed with respect to the stack table 100. That is, the stack mandrel 200 may fix the separator 30 and the electrode 20 to the stack table 100 during the stacking of the separator 30 and the electrode 20 to form the electrode assembly EA.

Here, the stack mandrel 200 may include a pair of stack mandrels, each located corresponding to each of two end portions of the folded edge of the separator 30. As shown in FIG. 4, while the second stack mandrel 202 fixes the electrode 20 and the separator 30 and supports the separator 30 at the right side of the separator 30, the first stack mandrel 201 may be separated from the electrode assembly EA to fix the electrode 20 and the separator 30 to be stacked next. Because the pair of stack mandrels 200 support the end portions of the separator 30, the stack mandrel 200 may not be disposed at the central area of the separator 30 in the length direction of the separator 30. Accordingly, each of the pair of stack mandrels 200 may be separated from the electrode assembly EA by even slight movements in the length direction. Thus, the insertion and separation of the stack mandrel 200 into/from the electrode assembly EA may be done rapidly, thereby preventing time delays in the process.

The first stack mandrel 201 separated from the electrode assembly EA may be inserted into the electrode assembly EA again as shown in FIG. 5. A drawing showing the process of moving the electrode 20 toward the separator 30 between the processes shown in FIGS. 4 and 5 may be omitted. The process of moving the electrode 20 toward the separator 30 may be similar to the process shown in FIGS. 2 and 3, except that the movement direction of the electrode 20 is opposite. For example, when the electrode 20 is moved from left to right and placed on the separator 30, and then the separator 30 is folded, another electrode 20 may be moved from right to left and placed on the separator 30. During the separation and insertion of the first stack mandrel 201 from/into the electrode assembly EA, the second stack mandrel 202 inserted into the electrode assembly EA may fix the electrode 20 and the separator 30.

Referring back to FIG. 6, a positional relationship between the stack mandrel 200 and the electrode assembly EA will be described. When the separator 30 is divided into folded parts, the separator 30 may include the separator part 39 located between the opposing electrodes 20. The separator 30 may include a closing edge 32a where the end portions of the adjacent separator parts 39 are connected to each other, and an open edge 32b where the end portions of the adjacent separator parts 39 are separated from each other. In other words, the separator 30 may have the closing edge 32a formed by the folding, and the open edge 32b at a side that is different from the side where the closing edge 32a is present. The stack mandrel 200 may be located adjacent to the closing edge 32a to support the inside of the portion where the closing edge 32a is present. Accordingly, the separator 30 may be supported by the stack mandrel 200 to form the clear closing edge 32a. The stack mandrel 200 may directly apply pressure to the separator part 39. The electrode 20 located between the separator parts 39 may indirectly apply pressure to the stack mandrel 200 by applying pressure to the separator 30. Accordingly, the electrode 20-the separator part 39-the stack mandrel 200 may be stacked in that order as it goes upward.

Here, as the separator 30 is supported by the stack mandrel 200, the closing edge 32a formed at the folded portion may be clearly formed. As shown in FIG. 5, as the pair of stack mandrels 200 are provided to ease the insertion into and separation from the electrode assembly EA, there may be no component for supporting the separator 30 between the pair of stack mandrels 200 during the folding of the separator 30. Accordingly, the closing edge 32a of the separator 30 that does not overlap the stack mandrel 200 may not be folded properly, causing swelling. The stacking system 1 according to the first embodiment of the present disclosure may include the following architecture to solve the above-described problems.

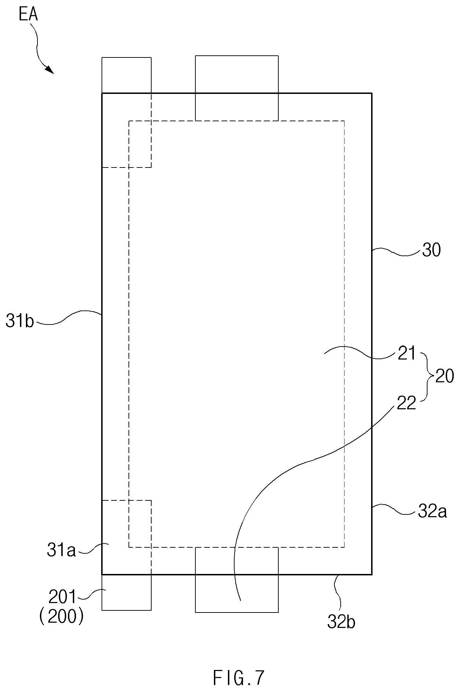

FIG. 7 is a top view of the electrode assembly EA shown in FIG. 6 being stacked. FIG. 8 is a perspective view of the electrode moving device 400 and the pressure applying device 600 shown in FIG. 2, when viewed from below.

The pressure applying device 600 according to the first embodiment of the present disclosure will be described with reference to FIGS. 7 to 9.

As shown in FIG. 7, the edge of the separator 30 that does not overlap the stack mandrel 200 may become swollen. To prevent this, as shown in FIG. 8, the stacking system 1 may further include the pressure applying device 600 configured to apply pressure to the edge of the separator 30. The pressure applying device 600 may bring the adjacent separators 30 closer together by applying pressure to the edge of the separator 30. Further, the pressure applying device 600 may apply pressure to the area that does not overlap the stack mandrel 200 to prevent swelling on the edge of the separator 30 where pressure is not applied by the stack mandrel 200.

In other words, the edge of the separator 30 may include an overlapping edge region 31a that overlaps the stack mandrel 200 and a non-overlapping edge region 31b that does not overlap the stack mandrel 200. The pressure applying device 600 may be configured to apply pressure to the non-overlapping edge region 31b. Accordingly, the pressure applying device 600 may be configured to prevent gaps between the edges of each part of the separator 30 being stacked, during the folding and stacking of the separator 30.

Further, the pressure applying device 600 may be configured to apply heat to the separator 30 to make sure that the separator 30 is folded very well, thereby preventing swelling.

As mentioned above, the pair of stack mandrels 200 may be each located at the end portion of the separator 30 in the extension direction to support each end portion of the folded portion of the separator 30. In this instance, the pressure applying device 600 may be located between the pair of stack mandrels 200 in the length direction of the separator 30 while applying pressure to the separator 30. However, in some instances, rather than the pair of stack mandrels 200, a single stack mandrel 200 may be provided, and in this case, the pressure applying device 600 may apply pressure to a portion of the separator 30 that is likely to become swollen, but not between the stack mandrels 200.

In this instance, the pressure applying device 600 may be configured to apply pressure to the closing edge 32a while the stack mandrel 200 supports the separator 30, in order to prevent an air gap from forming in the closing edge 32a. However, if necessary, the pressure applying device 600 may apply pressure to the open edge 32b. It will be described in further detail in the second embodiment of the present disclosure.

The pressure applying device 600 may be spaced apart from the overlapping edge region 31a while the stack mandrel 200 supports the separator 30. That is, the pressure applying device 600 may apply pressure to an edge region where the closing edge region 32a and the non-overlapping edge region 31b overlap. In particular, when it is said that the pressure applying device 600 does not apply pressure to the overlapping edge region 31a, it may signify that the pressure applying device 600 does not apply pressure or heat to the stack mandrel 200 and the separator 30 located at the overlapping edge region 31a. When the pressure applying device 600 applies pressure to the overlapping edge region 31a, the stack mandrel 200 and the separator 30 may be joined together, making it difficult to separate the stack mandrel 200 from the electrode assembly EA.

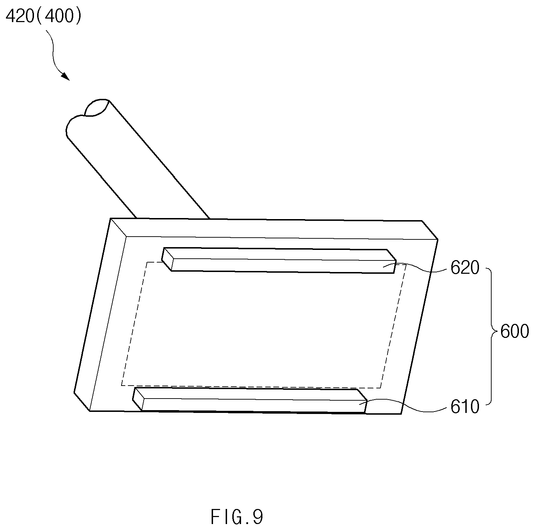

As mentioned above, the electrode moving device 400 may be further included to move the electrode 20 toward the separator 30. In this instance, the pressure applying device 600 may be coupled to the electrode moving device 400 as shown in FIGS. 8 and 9. Accordingly, the pressure applying device 600 may be moved together with the electrode moving device 400. The pressure applying device 600 may be moved when the electrode moving device 400 is moved, so there may be no means for movement.

The electrode moving device 400 may hold the electrode 20 and move the electrode 20. The electrode moving device 400 may separate the electrode 20 above the separator 30. The pressure applying device 600 may be located on the bottom of the electrode moving device 400 to apply pressure to the separator 30 while the electrode moving device 400 is located above the separator 30. More specifically, the pressure applying device 600 may be located on the bottom of the second electrode moving device 420. However, if necessary, the first electrode moving device 410 and the second electrode moving device 420 may be combined into one, and in the case of the single electrode moving device 400, the pressure applying device 600 may be coupled to the single electrode moving device 400. Accordingly, while the electrode moving device 400 places the electrode 20 on the separator 30, the pressure applying device 600 may apply pressure to the edge of the separator 30. Accordingly, by the pressure applying device 600, it does not require the extra time to apply pressure to the edge of the separator 30, and thus the time spent applying pressure to the edge of the separator 30 is unnecessary, so it may be possible to prevent time delays in the production of the electrode assembly EA.

As previously mentioned, the stack mandrel 200 may include the first stack mandrel 201 and the second stack mandrel 202 located adjacent to the pair of opposing closing edges 32a of the separator 30 during the folding of the separator 30, respectively and configured to form the pair of closing edges 32a in an alternating manner, respectively.

In addition, the pressure applying device 600 may include a plurality of pressure applying devices. Any one of the plurality of pressure applying devices 600 may be referred to as a first pressure applying device 610, and the other one may be referred to as a second pressure applying device 620. The first pressure applying device 610 may apply pressure to the separator 30 while the first stack mandrel 201 supports the separator 30. In addition, the second pressure applying device 620 may apply pressure to the separator 30 while the second stack mandrel 202 supports the separator 30. In other words, the pressure applying device 600 as used herein may be the superordinate concept that encompasses the common feature of the first pressure applying device 610 and the second pressure applying device 620. The pressure applying device 600 may be spaced apart from the electrode 20 while applying pressure to the separator 30. The pressure applying device 600 may be spaced apart from the electrode 20 to avoid damage to the electrode 20.

Referring to FIG. 9, the first pressure applying device 610 may be only located at one side of the portion where the electrode 20 is held. The first pressure applying device 610 may apply pressure to only one of the closing edges 32a of the separator 30 while the electrode 20 is placed on the separator 30. The second pressure applying device 620 may apply pressure to the other one of the closing edges 32a of the separator 30. In other words, in the relative position regarding the portion where the electrode 20 is held in the electrode moving device 400, the second pressure applying device 620 may be located opposite the first pressure applying device 610. To this end, when the portion where the electrode 20 is held has a shorter side and a longer side, the pressure applying device 600 may extend along one of the pair of longer sides.

Further, accordingly, the first pressure applying device 610 and the second pressure applying device 620 may not contact the separator 30 at the same time. While the pressure applying device 600 applies pressure to the edge of the separator 30, the separator 30 may be pushed. In this instance, when pressure is applied to each closing edge 32a at different timing, even though it is pushed, pressure may be applied to the closing edge 32a with smaller errors in pressure applying position relative to the electrode 20.

Additionally, the stack table 100 may be configured to support the separator 30 while the pressure applying device 600 applies pressure to the separator 30.

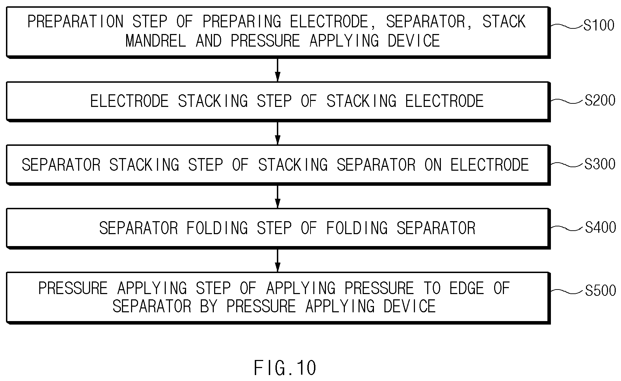

FIG. 10 is a flowchart of a method for manufacturing the electrode assembly EA performed by the stacking system 1 shown in FIG. 2.

The method for manufacturing the electrode assembly EA according to the first embodiment of the present disclosure will be described with reference to FIG. 10.

The electrode assembly EA may be manufactured by stacking the separator 30 and the electrode 20 described above. Accordingly, the above description may be seen as describing a part of the method for manufacturing the electrode assembly EA by the stacking system 1.

The method for manufacturing the electrode assembly EA may include a preparation step (S100), an electrode stacking step (S200), a separator stacking step (S300), a separator folding step (S400) and a pressure applying step (S500) as shown in FIG. 10.

The preparation step (S100) may be a step of preparing the electrode 20, the separator 30 located between the electrodes 20, the stack mandrel 200 configured to hold the end portions of the electrode 20 and the separator 30, and the pressure applying device 600 configured to apply pressure to the edge of the separator 30. The electrode stacking step (S200) may be a step of stacking the electrode 20 on the separator 30. The separator stacking step (S300) may be a step of stacking the separator 30 on the electrode 20. The separator folding step (S400) may be a step of fixing the end portions of the separator 30 and the electrode 20 by the stack mandrel 200 and folding the separator 30. The pressure applying step (S500) may be a step of applying pressure to the edge of the separator 30 by the pressure applying device 600. In the pressure applying step (S500), the pressure applying device 600 may be configured to apply pressure to the non-overlapping edge region 31b of the separator 30 that does not overlap the stack mandrel 200. In this instance, the separator stacking step (S300) may be performed at the same or similar timing to the pressure applying step (S500).

Hereinafter, other embodiment than the first embodiment will be described. The common description with the first embodiment is omitted, and the other embodiment will be described based on differences. In other words, it is obvious that if any, details not described in the other embodiment may be supplemented through the description of the first embodiment.

### Second embodiment

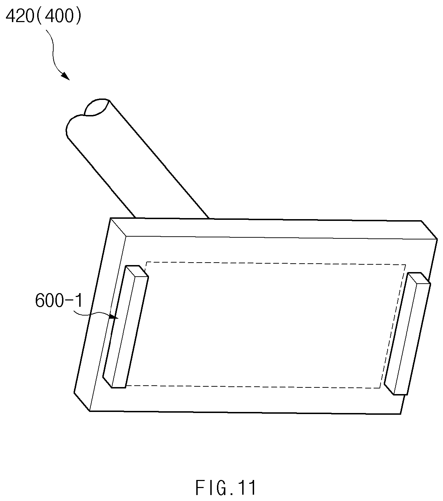

FIG. 11 is a perspective view of the electrode moving device 400 and the pressure applying device 600-1 according to a second embodiment of the present disclosure when viewed from below.

The pressure applying device 600-1 according to the second embodiment of the present disclosure will be described with reference to FIG. 11.

The second embodiment is different from the first embodiment in that the edge to which the pressure applying device 600-1 applies pressure is the open edge 32b.

The pressure applying device 600-1 may be configured to apply pressure to the open edge 32b while the stack mandrel 200 supports the separator 30 to prevent a short circuit in the electrode 20. When the separator 30 is folded inwards, the electrode 20 at an area adjacent to the open edge 32b may be exposed, causing physical contact between the adjacent electrodes 20. The pressure applying device 600-1 of the second embodiment may apply pressure to the open edge 32b to prevent the direct contact.

The pressure applying device 600-1 may extend along the shorter side of the portion where the electrode 20 is held. Further, the pressure applying devices 600-1 may include a pair of pressure applying devices, each corresponding to each of the pair of shorter sides of the portion where the electrode 20 is held.

### Third embodiment

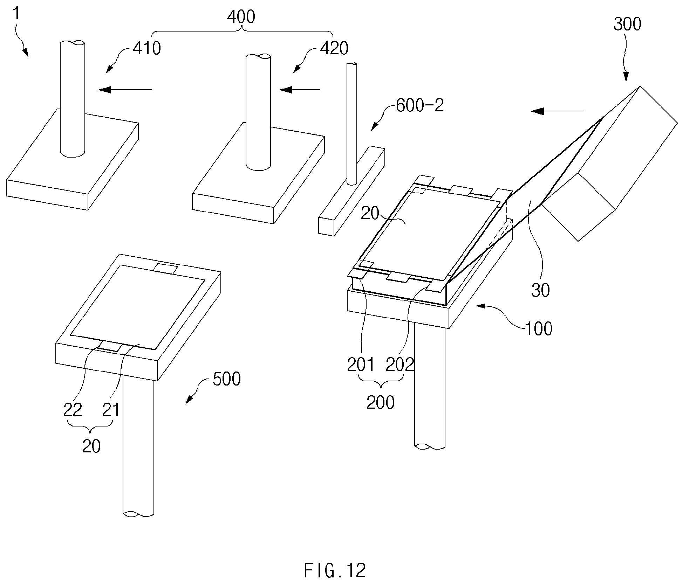

FIG. 12 is a conceptual diagram showing the stacking system 1 according to a third embodiment of the present disclosure.

The pressure applying device 600-2 according to the third embodiment of the present disclosure will be described with reference to FIG. 12.

The third embodiment is different from the first embodiment in that the pressure applying device 600-2 is not coupled to the electrode moving device 400.

The pressure applying device 600-2 may be provided separately from the electrode movement device 400. Accordingly, the pressure applying device 600-2 may apply pressure to the separator 30 separately from the movement of the electrode 20.

Additionally, as mentioned above, although each embodiment has been described as being applied on the assumption that the separator 30 is stacked in a zigzag pattern, the present disclosure may be applied to the case in which each separator 30 part located between the electrodes 20 is formed and stacked without departing from the aspects of the present disclosure.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to certain embodiments and drawings, the present disclosure is not limited thereto, and the present disclosure may be embodied in different forms by persons having ordinary skill in the technical field pertaining to the present disclosure within the technical aspects of the present disclosure and the appended claims and their equivalents.

### [List of Reference Numerals]

B: Secondary battery
10: Battery case
EA: Electrode assembly
20: Electrode
21: Coated portion
22: Uncoated portion
30: Separator
31a: Overlapping edge region
31b: Non-overlapping edge region
32a: Closing edge
32b: Open edge
39: Separator part
1: Stacking system
100: Stack table
200: Stack mandrel
201: First stack mandrel
202: Second stack mandrel
300: Separator feeding device
400: Electrode moving device
410: First electrode moving device
420: Second electrode moving device
500: Alignment table
600, 600-1, 600-2: Pressure applying device
610: First pressure applying device
620: Second pressure applying device

## Claims

1. A stacking system comprising:
a stack mandrel configured to support at least a part of a folded portion of a separator so that the separator is folded between electrodes, and to hold an end portion of the electrode; and
a pressure applying device configured to apply pressure to an edge of the separator,
wherein the edge of the separator includes:
an overlapping edge region that overlaps the stack mandrel; and
a non-overlapping edge region that does not overlap the stack mandrel, and
wherein the pressure applying device is configured to apply pressure to the non-overlapping edge region.

2. The stacking system according to claim 1,
wherein the pressure applying device is configured to prevent a gap between the edges of each part of the separator being stacked during folding and stacking of the separator.

3. The stacking system according to claim 1,
wherein the pressure applying device is configured to apply heat to the separator.

4. The stacking system according to claim 1,
wherein the stack mandrel includes a pair of stack mandrels, each located at an end portion of the separator in an extension direction to support each end portion of the folded portion of the separator, and
wherein the pressure applying device is located between the pair of the stack mandrels while applying pressure to the separator.

5. The stacking system according to claim 1, further comprising:
a separator feeding device configured to feed the separator so that while the separator is supported by the stack mandrel, the separator is folded to form a separator part located between the electrodes,
wherein the separator includes:
a closing edge where end portions of adjacent separator parts are connected to each other; and
an open edge where the end portions of the adjacent separator parts are separated from each other.

6. The stacking system according to claim 5,
wherein the pressure applying device is configured to apply pressure to the closing edge while the stack mandrel supports the separator in order to prevent an air gap from forming in the closing edge.

7. The stacking system according to claim 1,
wherein the pressure applying device is spaced apart from the overlapping edge region while the stack mandrel supports the separator.

8. The stacking system according to claim 5,
wherein the pressure applying device is configured to apply pressure to the open edge while the stack mandrel supports the separator in order to prevent a short circuit in the electrode.

9. The stacking system according to claim 5,
wherein the stack mandrel includes a first stack mandrel and a second stack mandrel located adjacent to a pair of opposing closing edges of the separator during the folding of the separator, respectively, and configured to form the pair of closing edges in an alternating manner, respectively, and
wherein the pressure applying device includes:
a first pressure applying device to apply pressure to the separator while the first stack mandrel supports the separator; and
a second pressure applying device to apply pressure to the separator while the second stack mandrel supports the separator.

10. The stacking system according to claim 9,
wherein the first pressure applying device and the second pressure applying device do not contact the separator at a same time.

11. The stacking system according to claim 1, further comprising:
an electrode moving device configured to move the electrode toward the separator,
wherein the pressure applying device is coupled to the electrode moving device.

12. The stacking system according to claim 1, further comprising:
an electrode moving device configured to move the electrode toward the separator,
wherein the electrode moving device is configured to hold and move the electrode, and separate the electrode above the separator, and
wherein the pressure applying device is located on bottom of the electrode moving device to apply pressure to the separator while the electrode moving device is located above the separator.

13. The stacking system according to claim 11,
wherein the electrode moving device is configured to hold the electrode by negative pressure, and
wherein the stacking system further comprises:
an alignment table on which the electrode is placed to allow the electrode moving device to hold the electrode.

14. The stacking system according to claim 1,
wherein the pressure applying device is spaced apart from the electrode while applying pressure to the separator.

15. The stacking system according to claim 1, further comprising:
a stack table where the separator and the electrode are stacked,
wherein the stack table is configured to support the separator while the pressure applying device applies pressure to the separator.

16. A stacking system comprising:
a pair of stack mandrels configured to hold an end portion of an electrode and support two end portions of a folded portion of the separator so that the separator is folded between the electrodes; and
a pressure applying device configured to apply pressure to an edge of the separator,
wherein the pressure applying device is located between the pair of the stack mandrels while applying pressure to the edge of the separator.

17. The stacking system according to claim 16,
wherein the edge of the separator includes:
an overlapping edge region that overlaps the stack mandrel; and
a non-overlapping edge region that does not overlap the stack mandrel, and
wherein the pressure applying device is configured to apply pressure to the non-overlapping edge region.

18. The stacking system according to claim 16,
wherein the pressure applying device is configured to prevent a gap between the edges of each part of the separator being stacked during folding and stacking of the separator.

19. The stacking system according to claim 16,
wherein the pressure applying device is configured to apply heat to the separator.

20. A method for manufacturing an electrode assembly, the method comprising:
a preparation step of preparing electrodes, a separator located between the electrodes, a stack mandrel configured to hold end portions of the electrode and the separator, and a pressure applying device configured to apply pressure to an edge of the separator;
an electrode stacking step of stacking the electrode;
a separator stacking step of stacking the separator on the electrode;
a separator folding step of fixing the end portions of the separator and the electrode by the stack mandrel, and folding the separator; and
a pressure applying step of applying pressure to the edge of the separator by the pressure applying device,
wherein the pressure applying step is configured to apply pressure to a non-overlapping edge region where the separator does not overlap the stack mandrel.
